Europäisches Patentamt

European Patent Office

Office européen des brevets

(11) Veröffentlichungsnummer: **0 123 195**
**B1**

(12) **EUROPÄISCHE PATENTSCHRIFT**

(45) Veröffentlichungstag der Patentschrift :
30.07.86

(21) Anmeldenummer : 84103918.3

(22) Anmeldetag : 07.04.84

(51) Int. Cl.⁴ : **F 16 L 15/00**, F 16 L 21/00,
F 16 L 47/00

(54) Schraubmuffe.

(30) Priorität : 26.04.83 DE 3315030

(43) Veröffentlichungstag der Anmeldung :
31.10.84 Patentblatt 84/44

(45) Bekanntmachung des Hinweises auf die Patenterteilung : 30.07.86 Patentblatt 86/31

(84) Benannte Vertragsstaaten :
AT BE CH DE FR LI NL SE

(56) Entgegenhaltungen :
DE-A- 2 240 548
DE-A- 2 307 467
DE-A- 2 642 888
DE-B- 1 008 967
US-A- 4 093 280

(73) Patentinhaber : Friedrichsfeld GmbH Steinzeug- und
Kunststoffwerke
Steinzeugstrasse 50
D-6800 Mannheim 71 (DE)

(72) Erfinder : Ehrhardt, Peter
Dachspfad 3
D-6800 Mannheim 71 (DE)
Erfinder : Sichler, Wolfgang
Sinsheimer Strasse 20
D-6800 Mannheim 61 (DE)

(74) Vertreter : Klose, Hans, Dipl.-Phys.
Kurfürstenstrasse 32
D-6700 Ludwigshafen (DE)

## Beschreibung

Die Erfindung bezieht sich auf eine Schraubmuffe aus Kunststoff, vorzugsweise aus Polyäthylen, zum Anschluß eines Metallrohres oder Metallfittings mit Rohrgewinde.

Mit Schraubmuffen der genannten Art (bzw. DE-B-1 008 967) sollen dichte Verbindungen zwischen einem Kunststoffrohr oder dergl. und einem Metallrohr herstellbar sein. Um eine gasdichte Verbindung herstellen zu können, mußten bisher besondere Dichtungselemente vorgesehen werden. Auch das Dichtelement mußte beständig gegen das durch das Metallrohr strömende Medium sein. Auch sei auf Schwierigkeiten bei der Montage verwiesen, wenn derartige Dichtungselemente auf der Baustelle, insbesondere in einem Erdgraben « verloren gingen » oder aus anderen Gründen nicht verfügbar waren.

Der Erfindung liegt die Aufgabe zugrunde, eine Schraubmuffe der genannten Art vorzuschlagen, welche einen einfachen und kostengünstigen Aufbau aufweist und in welche ein Metallrohr dicht und lösbar fest eingeschraubt werden kann. Hierbei soll die Muffe und gesamte Verbindungsbereich wenigstens so fest ausgelegt sein, wie ein evtl. auf der anderen Seite angeschlossenes Kunststoffrohr der gleichen Nennweite und der gleichen Druckstufe. Es soll ferner ein zusätzliches Dichtelement vermieden werden. Schließlich soll ein weiterer Werkstoff mit einschränkenden Bedingungen, insbesondere hinsichtlich chemischer Beständigkeit, unter Berücksichtigung des durchfließenden Mediums vermieden werden. Auch soll die Muffe eine hohe Beständigkeit gegen Korrosion und insgesamt eine hohe Funktionssicherheit aufweisen.

Zur Lösung dieser Aufgabe wird vorgeschlagen, daß eine metallische Einspritzmutter vorgesehen ist, die innen nur über eine vorgegebene Länge ein Gewinde aufweist, daß an den vorderen Bereich ein Mantel anschließt, dessen Innendurchmesser größer ist, als der Außendurchmesser des genannten Innengewindes und daß der Mantel innen derart mit einem Kunststoffring ausgefüllt ist, daß beim Anschließen das Rohrgewinde in den Kunststoff einschneidet und/oder eingepreßt wird.

Die erfindungsgemäße Schraubmuffe zeichnet sich durch einen vergleichsweise einfachen konstruktiven Aufbau aus und gewährleistet eine überaus funktionssichere und feste Verbindung mit dem anzuschließenden Metallrohr. Das Innengewinde erstreckt sich nur über eine vorgegebene Länge im vorderen Bereich. Hierbei ist das Gewinde erfindungsgemäß mechanisch höher belastbar als ein auf der anderen Seite der Schraubmuffe anzuschließendes Kunststoffrohr. Durch die Vorgabe der Gewindelänge kann den jeweiligen Anforderungen ohne Schwierigkeiten entsprochen werden. Der sich anschließende Mantel weist einen Innendurchmesser auf, welcher größer ist als der Außendurchmesser des Innengewindes. Es ist also ein hinterschnittener Bereich vorhanden, welcher beim Spritzen der Schraubmuffe mit Kunststoff ausgefüllt worden ist. Dieser ringförmig an der Innenfläche des Mantels befindliche Kunststoff bildet eine zuverlässige Dichtung, da das Rohrgewinde beim Anschließen in den Kunststoff einschneidet und/oder in diesen eingepreßt wird. Es ist somit kein zusätzliches Dichtelement erforderlich und es ist ersichtlich, daß insoweit die Handhabung nicht unwesentlich erleichtert wird. Von maßgebender Bedeutung ist ferner die einfache Herstellbarkeit, da der Kunststoffring beim Spritzen der Schraubmuffe sozusagen nebenher mitgefertigt wird, ohne daß hierfür besondere Maßnahmen erforderlich sind. Darüberhinaus sei hervorgehoben, daß die Muffe nur aus zwei Werkstoffen, nämlich dem Kunststoff und dem Metall der Einspritzmutter besteht. Ein weiterer Werkstoff mit einschränkenden Bedingungen bezüglich chemischer Beständigkeit ist also nicht vorhanden ; die hieraus resultierenden Vorteile liegen auf der Hand.

In einer zweckmäßigen Ausgestaltung ist die Länge des Gewindes etwa im Bereich von einem Drittel der Länge vorgegeben, welche ein übliches Rohrgewinde für Metallrohrverbindungen, insbesondere nach DIN 2999 aufweist. Bei einer derart vorgegebenen Länge ist eine hinreichend hohe Belastbarkeit unter Berücksichtigung der Belastbarkeit bzw. Festigkeit eines anzuschlie senden Kunststoffrohres gegeben. Mit anderen Worten, das Gewinde ist nicht auf die Festigkeit des Metallrohres sondern vielmehr auf die des Kunststoffes dimensioniert. Folglich kann die metallische Einspritzmutter, auf deren Innenfläche einerseits das Gewinde und andererseits aber auch der genannte Kunststoffring vorhanden sind, noch vergleichsweise kurz ausgebildet sein. Bevorzugt ist die Länge des zylindrischen Mantels und des Gewindes größer als die Länge des Rohrgewindes. Hierdurch wird eine zuverlässige und dichte Verbindung bei optimaler Materialausnutzung sichergestellt.

In einer wesentlichen Ausgestaltung schließt sich in axialer Richtung an den zylindrischen Mantel ein Endstück an, dessen Innendurchmesser kleiner als der des Mantels ist. Für den Kunststoffring ist somit eine Innenkammer geschaffen, welche in axialer Richtung zum einen durch den vorderen Bereich mit dem Innengewinde und zum anderen durch das Endstück und ferner in radialer Richtung durch den Mantel begrenzt ist. Beim Einschrauben des Rohrgewindes wird somit zuverlässig ein Ausweichen des Kunststoffringes unterbunden und das Rohrgewinde schneidet sich zuverlässig in den Kunststoffring ein. Der Mantel dient erfindungsgemäß zur radialen Abfangung und der vordere Bereich und auch das Endstück der metallischen Einspritzmutter unterbinden ein axiales Auswandern.

In einer wesentlichen Ausgestaltung weist der Mantel und/oder das Endstück radiale Durchbrechungen auf, welche ebenfalls beim Spritzen mit Kunststoff ausgefüllt sind. Es ist ersichtlich, daß auf diese Weise eine zuverlässige Lagesicherung der Einspritzmutter bezüglich axialer Bewegungen und/oder Drehbewegungen erreicht wird.

In einer bevorzugten Ausführungsform ist die Einspritzmutter, abgesehen von dem Innengewinde des vorderen Bereiches, vollständig in Kunststoff eingebettet. Die Einspritzmutter ist somit durch den Kunststoff vor äußeren Einwirkungen abgeschirmt und insbesondere das strömende Medium kann nicht an die Einspritzmutter gelangen. Auch die Stirnfläche des vorderen Bereiches ist durch den dort vorhandenen Kunststoffbund vor Korrosion geschützt.

Um eine feste Verbindung der metallischen Einspritzmutter mit dem Kunststoff der Schraubmuffe zu erhalten, weist die Einspritzmutter auf ihrer Außenfläche zweckmäßig Rippen, Noppen, ein Gewinde oder dergleichen auf. Es ist ersichtlich, daß so auf einfache Weise eine zuverlässig Fixierung erreicht wird, da die besagten Teile in geeigneter Weise in den Kunststoff eingreifen.

In einer vorteilhaften Ausführungsform ist das Rohrgewinde des anzuschließenden Metallrohres zylindrisch oder kegelig ausgebildet. Je nach den Anforderungen wird das entsprechende Gewinde vorgesehen und es kann für alle Anwendungsfälle eine zuverlässige Verbindung gewährleistet werden.

In einer erfindungsgwesentlichen Ausführungsform ist am anderen Ende der Schraubenmuffe auf deren Innenfläche eine Schweißdrahtwicklung angeordnet. In das genannte andere Ende der Schraubmuffe kann dann in einfacher Weise ein Kunststoffrohr eingeschoben werden und mit der Schraubmuffe verbunden werden. Hierfür muß die Schweißdrahtwicklung lediglich mit einem Strom beaufschlagt werden, so daß der Kunststoff der Schraubenmuffe sowie des eingeschobenen Rohres schmilzt und eine Verschweißung stattfindet. In die Einspritzmutter wird, wie oben erläutert, ein Metallrohr eingeschraubt. Die derart ausgebildete Schraubmuffe gewährleistet eine äußerst zuverlässige und dichte Verbindung zwischen einem Kunststoffrohr und einem Metallrohr. Es sei angemerkt, daß das Kunststoffrohr auch als ein kurzer Stutzen ausgebildet sein kann, welcher beispielsweise an dem Gehäuse eines Ventils, einer Armatur oder dergl. angeordnet ist.

Weitere erfindungswesentliche Merkmale und Vorteile ergeben sich aus den nachfolgend anhand der Zeichnung näher erläuterten Ausführungsbeispielen. Es zeigen :

Figur 1 einen Schnitt durch eine Schraubmuffe, wobei in dem oberen Teil das zugeordnete Metallrohr vor der Montage und im unteren Teil nach der Montage dargestellt ist,

Figur 2 einen Schnitt durch eine Ausführungsform, bei welcher die Einspritzmutter eine Innenkammer aufweist,

Figur 3 einen Schnitt durch eine Einspritzmutter mit radialen Durchbrüchen,

Figur 4 eine Ausführungsform der Einspritzmutter mit einem Außengewinde,

Figur 5 eine Ausführungsform der Einspritzmutter mit äußeren Rippen,

Figur 6 eine Ausführungsform der Einspritzmutter mit Außengewinde und radialen Durchbrüchen,

Figur 7 teilweise in einem Schnitt und in einer Ansicht eine Doppelmuffe, welche an einem Ende eine Schweißdrahtwicklung und am anderen Ende eine Einspritzmutter aufweist,

Figur 8 eine Doppelmuffe als Bogen,

Figur 9 eine Schraubmuffe kombiniert mit einem Einsteckende,

Figur 10 eine Schraubmuffe kombiniert mit einem Flanschanschluß.

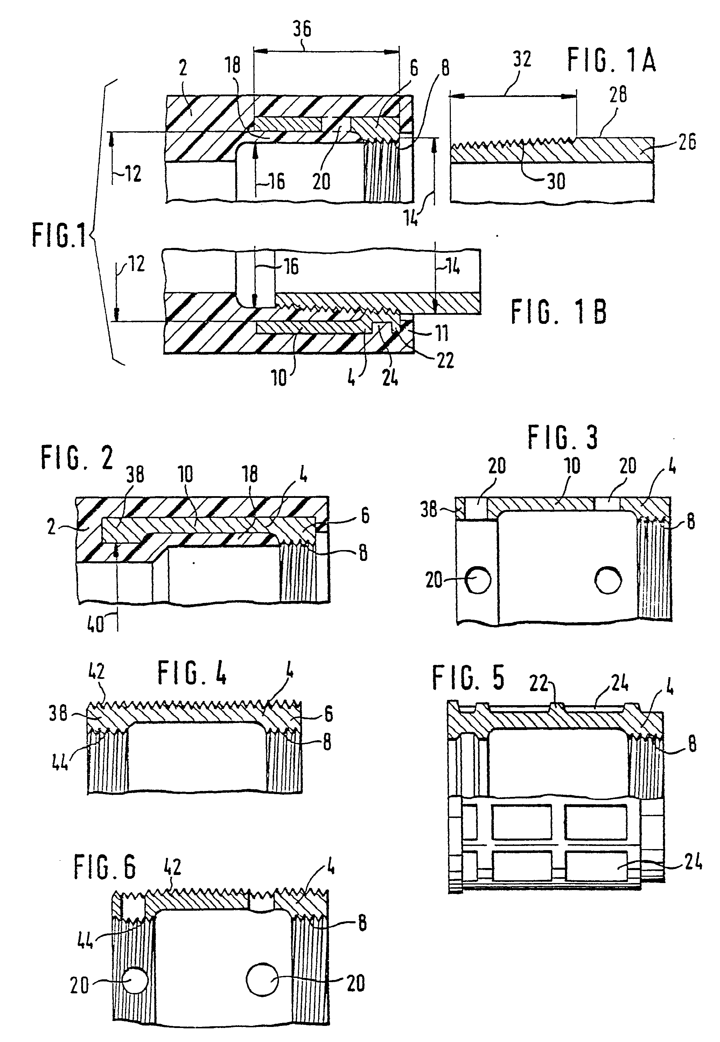

Fig. 1 zeigt eine Schraubmuffe 2 aus Kunststoff, in welche eine Einspritzmutter 4 aus Metall eingebettet ist. Die Einspritzmutter 4 weist einen vorderen Bereich 6 mit einem Innengewinde 8 auf. Die Einspritzmutter 4 ist mit Ausnahme des Innengewindes 8 vollständig von dem Kunststoff umspritzt, wobei die Kunststoffmuffe 2 vorne noch einen Bund 11 aufweist. An den vorderen Bereich 6 schließt sich ein Mantel 10 der Einspritzmutter 4 an. Der Innendurchmesser 12 des Mantels 10 ist größer als der Außendurchmesser 14 des Innengewindes 8. Innerhalb des Mantels 10 befindet sich ein Kunststoffring 18, der Bestandteil der Schraubmuffe 2 ist und beim Umspritzen der Einpreßmutter gebildet wurde. Der Kunststoffring 18 weist einen Innendurchmesser 16 auf, der kleiner als der o. a. Außendurchmesser 14 ist. Erfahrungsgemäß liegt dieser Innendurchmesser 16 zwischen dem Flankendurchmesser und dem Gewindekerndurchmessers des Innengewindes. Die Einspritzmutter 4 weist ferner radiale Durchbrüche 20 auf, welche ebenfalls mit dem Kunststoff ausgefüllt sind. Die radiale Durchbrüche bewirken zum einen eine zuverlässige Fixierung sowohl gegen Verdrehung als auch gegen axiale Bewegungen und zum anderen gewährleisten sie beim Spritzen des Kunststoffes eine gleichmäßige Verteilung desselben derart, daß auch und gerade der Kunststoffring 18 vollständig ausgebildet wird. Zur Fixierung ist auf der Außenfläche der Einspritzmutter 4 eine Rippe 22 bzw. eine Ausnehmung 24 vorgesehen. Es versteht sich, daß den jeweiligen Anforderungen entsprechend die Durchbrüche 20 sowie Rippen 22 und Ausnehmung 24 vorgegeben werden.

Im oberen Teil von Fig. 1 ist ein Metallrohr 26 vor der Montage bzw. vor dem Einschrauben in die Schraubmuffe dargestellt. Es sei festgehalten, daß im Rahmen der Erfindung statt des Metallrohres auch ein Metallfitting, eine Metallapparatur eines Ventils usw. vorgesehen sein können. Nachfolgend soll nur noch von einem Metallrohr gesprochen werden, ohne hierdurch die Erfindung zu beschränken. Das Metallrohr 26 weist auf seiner Außenfläche 28 ein Rohrgewinde 30 auf, welches hier als ein kegeliges Gewinde dargestellt ist. Im Rahmen der Erfindung liegt auch ein zylindrisches Gewinde. Das Rohrgewinde 30 weist eine Länge 32 auf. Die Einspritzmutter 4 bzw. der Mantel 10 und der vordere Bereich 6 weisen eine Gesamtlänge 36 auf, welche größer ist als die Länge 32 des Rohrgewindes 30. Aus dem unteren Teil der Zeichnung ist zu erkennen, daß das Rohrgewinde 30 in den Kunststoffring 18 eingeschraubt ist. Durch das Einschrauben bzw. Eindrücken des Rohrgewindes in den Kunststoffring 18 entsteht eine hohe Pressung, die erhalten bleibt, da der Mantel 10 ein Ausweichen des Kunststoffes verhindert. Die Dichtheit der Verbindung ist somit in zuverlässiger Weise gewährleistet, während die mechanische Festigkeit mittels des vergleichsweise kurzen Innengewindes erreicht wird.

Fig. 2 zeigt eine Ausführungsform, bei welcher die Einspritzmutter 4 noch zusätzlich ein zylindrisches Endstück 38 aufweist. In axialer Richtung zwischen dem Endstück 38 und dem vorderen Bereich 6 befindet sich also eine innere Kammer für den Kunststoffring 18. Das zylindrische Endstück weist einen Innendurchmesser 40 auf, der etwa dem Kerndurchmesser des Innengewindes 8 entspricht. Beim Einschneiden des Gewindes unterbindet das zylindrische Endstück zuverlässig ein Ausweichen des Kunststoffes, wodurch eine besonders hohe Funktionssicherheit gewährleistet ist.

Fig. 3 zeigt einen Schnitt durch die Einspritzmutter 4, welche hier sowohl im Bereich des Mantels 10 als auch in dem zylindrischen Endstück 38 radiale Durchbrüche 20 aufweist. Aufgrund derartiger radialer Durchbrüche fließt beim Einspritzen der Kunststoff, insbesondere Polyäthylen, ungehindert zur Innenseite und der Kunststoffring 18 kann ungehindert hergestellt werden.

Bei der Ausführungsform gemäß Fig. 4 ist die Außenfläche der Einspritzmutter 4 mit einem Außengewinde 42 versehen, das sich über die gesamte Länge erstreckt. Auch mit einem derartigen Gewinde wird eine besonders zuverlässige Verankerung der Einspritzmutter 4 in der hier nicht dargestellten Steckmuffe gewährleistet. Ferner ist das Endstück 38 mit einem Innengewinde 44 versehen, wobei dieses Innengewinde vorzugsweise das gleiche Gewinde ist, wie im vorderen Bereich 6. Diese Gleichheit vereinfacht die Herstellung.

Gemäß Fig. 5 sind auf der Außenfläche der Einspritzmutter 4 verschiedene Rippen 22 angeordnet, zwischen welchen sich Ausnehmungen 24 befinden. Die umlaufenden Rippen 22 dienen ebenso wie die oben erläuterten Gewindegänge in hervorragender Weise zur Aufnahme von axialen Kräften.

Fig. 6 zeigt eine Ausführungsform der Einspritzmutter 4, bei welcher sowohl die bereits erläuterten Durchbrüche 20 als auch die Gewindegänge 42 und 44 vorhanden sind. Es ist ersichtlich, daß somit eine besonders zuverlässige und sichere Kraftübertragung von Kunststoffmuffe auf die Einspritzmutter 4 erfolgt. Das Gewinde 44 ist bevorzugt das gleiche wie das Innengewinde 8.

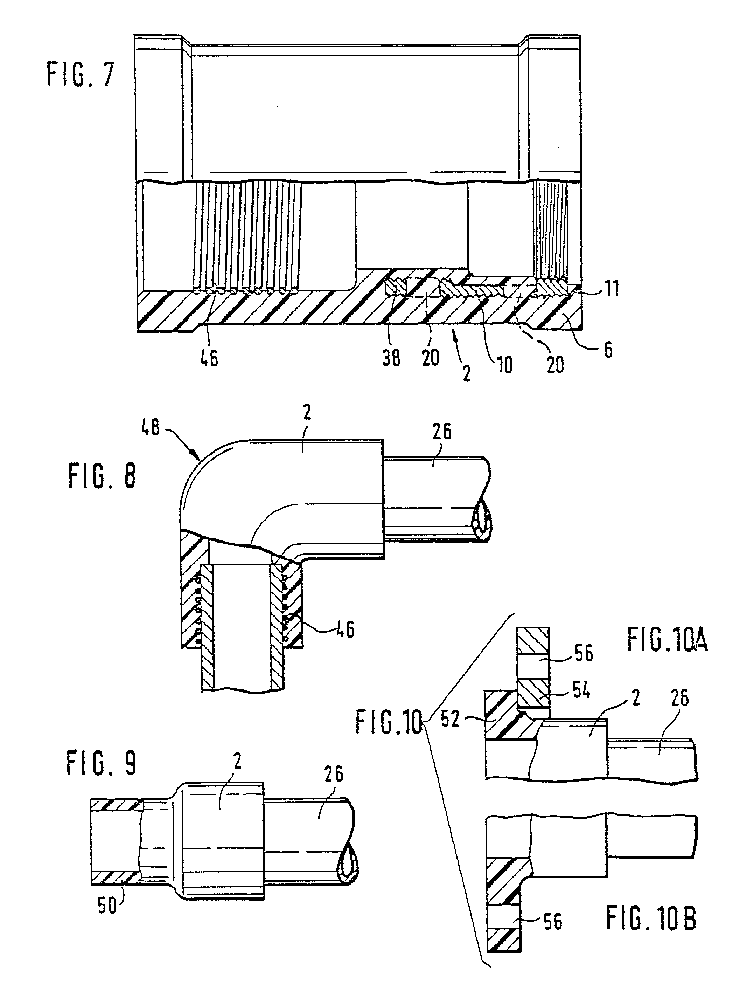

In Fig. 7 ist eine Doppelmuffe dargestellt, welche die erfindungsgemäße Schraubmuffe 2 enthält. In der Zeichnung links ist eine Schweißdraht-Wicklung 46 dargestellt. Dieses Schweißverfahren ist unter der Bezeichnung Heizwendel-Schweißen bekannt. Mit einer derartigen, erfindungsgemäßen Doppelmuffe kann ein Kunststoffrohr ohne Schwierigkeiten mit einem Metallrohr verbunden werden. Im Rahmen der Erfindung kann die Doppelmuffe auch für das Heizelement-Stumpfschweißen und das Heizelement-Schweißen ausgebildet sein.

Gemäß Fig. 8 ist die Schraubmuffe 2 in einem Bogenstück 48 in Form einer Doppelmuffe ebenfalls mit einer Schweißdraht-Wicklung 46 kombiniert. Bei der Ausführungsform gemäß Fig. 9 ist die Schraubmuffe 2 hingegen mit einem Einsteckende 50 kombiniert. Schließlich zeigt Fig. 10 eine Ausführungsform, bei welcher die Schraubmuffe 2 in Vebindung mit einem Flansch 52 zu sehen ist. Hierbei kann dem Flansch 52, wie in der Figur oben angedeutet, ein Ring 54 zugeordnet sein. Alternativ kann, wie unten dargestellt, der Flansch 52 geeignete Bohrungen 56 für Schrauben oder dergl. aufweisen.

Bezugszeichenliste

2 Schraubmuffe
4 Einspritzmutter
6 vorderer Bereich
8 Innengewinde
10 Mantel
11 Bund von 2
12 Innendurchmesser von 10
14 Außendurchmesser von 8
16 Innendurchmesser von 18
18 Kunststoffring
20 radialer Durchbruch
22 Rippe
24 Ausnehmung
26 Metallrohr
28 Außenfläche
30 Rohrgewinde
32 Länge von 30
36 Gesamtlänge
38 zylindrisches Endstück
40 Innendurchmesser von 38
42 Gewinde
44 Innengewinde
46 Wicklung
48 Bogenstück
50 Einsteckende
52 Flansch
54 Ring

**Patentansprüche**

1. Schraubmuffe aus Kunststoff, vorzugsweise aus Polyäthylen, zum Anschluß eines Metallrohres oder Metallfittings mit Rohrgewinde, dadurch gekennzeichnet, daß eine metallische Einspritzmutter (4) vorgesehen ist, die in einem vorderen Bereich (6) über eine vorgegebene

**Länge ein Innengewinde (8) aufweist, daß an den vorderen Bereich (6) ein Mantel (10) anschließt, dessen Innendurchmesser (12) größer ist als der Außendurchmesser (14) des Innengewindes (8), und daß der Mantel innen derart mit einem Kunststoffring (18) ausgefüllt ist, daß beim Anschließen das Rohrgewinde (30) in den Kunststoff einschneidet und/oder eingepreßt wird.**

2. Schraubmuffe nach Anspruch 1, dadurch gekennzeichnet, daß die Länge des Innengewindes (8) im Bereich von einem Drittel der Länge liegt, welche ein übliches Rohrgewinde, insbesondere nach DIN 2999, aufweist.

3. Schraubmuffe nach Ansruch 1 oder 2, dadurch gekennzeichnet, daß die Länge des zylindrischen Mantels (10) und des Innengewindes (8) größer ist als die Länge des Rohrgewindes (30).

4. Schraubmuffe nach einem der vorhergehenden Ansprüche, dadurch gekennzeichnet, daß in axialer Richtung an den zylindrichen Mantel (10) ein ringförmiges Endstück (38) anschließt, dessen Innendurchmesser (40) zumindest näherungsweise den Kerndurchmesser des Innengwindes (8) entpricht.

5. Schraubmuffe nach einem der vorhergehenden Ansprüche, dadurch gekennzeichnet, daß der Mantel (10) und/oder das Endstück (38) radiale Durchbrüche aufweisen, welche mit Kunststoff ausgespritzt sind.

6. Schraubmuffe nach einem der vorhergehenden Ansprüche, dadurch gekennzeichnet, daß die Einspritzmutter (4) mit Ausnahme des Innengewindes (8) in Kunststoff eingebettet ist, wobei ein Bund (11) die vordere Stirnfläche des Bereiches (6) umgreift.

7. Schraubmuffe nach einem der vorhergehenden Ansprüche, dadurch gekennzeichnet, daß auf der Außenfläche der Einspritzmutter (4) Rippen, Noppen, Gewinde oder dergl. angeordnet sind.

8. Schraubmuffe nach einem der vorhergehenden Ansprüche, dadurch gekennzeichnet, daß das Rohrgewinde (30) des Metallrohres (26) zylindrisch oder kegelig ist.

9. Schraubmuffe nach einem der vorhergehenden Ansprüche, dadurch gekennzeichnet, daß sie in eine Doppelmuffe mit einer Schweißmuffe integriert ist, wobei die Schweißmuffe für das Heizelement Stumpfschweißen, das Heizelement-Muffenschweißen oder das Heizwendelschweißen ausgebildet ist.

10. Schraubmuffe nach Anspruch 9, dadurch gekennzeichnet, daß am einen Ende in der Innenfläche der Doppelmuffe eine Schweißdraht-Wicklung (46) für das Heizwendelschweißen und am anderen Ende die Einspritzmutter (4) angeordnet ist.

11. Schraubmuffe nach einem der vorhergehenden Ansprüche, dadurch gekennzeichnet, daß am zylindrischen Endstück (38) ein Innengewinde (40) vorgesehen ist, das mit dem Innengewinde (8) am vorderen Bereich (6) übereinstimmt.

### Claims

1. A screwed-gland joint of plastics material, preferably of polyethylene, for joining a metal pipe or metal fitting with a pipe thread, characterized in that a metal insert nut (4) is provided which comprises an internal thread (8) over a predetermined length in a front area (6), a sleeve (10), the internal diameter (12) of which is greater than the external diameter (14) of the internal thread (8), is joined to the front area (6), and the interior of the sleeve is filled with a ring (18) of plastics material in such a way that during the joining procedure the pipe thread (18) cuts and/or is pressed into the plastics material.

2. A screwed-gland joint according to Claim 1, characterized in that the length of the internal thread (8) is in the range of one third of the length of a conventional pipe thread, in particular in accordance with DIN (German Industrial Standard) 2999.

3. A screwed-gland joint according to Claim 1 or 2, characterized in that the length of the cylindrical sleeve (10) and of the internal thread (8) is greater than the length of the pipe thread (30).

4. A screwed-gland joint according to any one of the preceding Claims, characterized in that an annular end member (38), the internal diameter (40) of which corresponds at least approximately to the core diameter of the internal thread (8), is joined to the cylindrical sleeve (10) in the axial direction.

5. A screwed gland joint according to any one of the preceding Claims, characterized in that the sleeve (10) and/or the end member (38) comprise radial openings which are injected with plastics material.

6. A screwed-gland joint according to any one of the preceding Claims, characterized in that the insert nut (4) is embedded in plastics material except for the internal thread (8), a collar (11) engaging around the front end face of the area (6).

7. A screwed-gland joint according to any one of the preceding Claims, characterized in that ribs, knubs, threads or the like are formed on the outer surface of the insert nut (8).

8. A screwed-gland joint according to any one of the preceding Claims, characterized in that the pipe thread (30) of the metal pipe is cylindrical or tapered.

9. A screwed-gland joint according to any one of the preceding Claims, characterized in that it is integrated in a double joint with a welded joint, the welded joint being formed for heating element butt welding, heating element sleeve welding or heating coil welding.

10. A screwed-gland joint according to Claim 9, characterized in that a welding wire coil (46) for heating coil welding is disposed at one end in the inner surface of the double joint and the insert nut (4) is disposed at the other end.

11. A screwed-gland joint according to any one of the preceding Claims, characterized in that an internal thread (40), which corresponds to the internal thread (8) at the front area (6), is provided on the cylindrical end member (38).

## Revendications

1. Manchon fileté en matière plastique, de préférence en polyéthylène, destiné à raccorder un tube métallique ou un raccord métallique possédant un filetage de tube, caractérisé en ce qu'il est prévu un écrou prisonnier métallique (4) qui présente un filetage intérieur (8) dans sa région avant (6) sur une longueur prédéterminée, en ce que, à la région avant (6) fait suite une jupe (10) dont le diamètre intérieur (12) est plus grand que le diamètre extérieur (14) du filetage intérieur (8), et en ce que la jupe est garnie intérieurement d'une bague de matière plastique (18) de telle manière que, lors du raccordement, le filetage du tube (30) morde dans la matière plastique et/ou s'enfonce dans cette dernière.

2. Manchon fileté selon la revendication 1, caractérisé en ce que la longueur du filetage intérieur (8) est de l'ordre du tiers de la longueur que présente un filetage de tube habituel, en particulier, selon la norme DIN 2999.

3. Manchon fileté selon la revendication 1 ou la revendication 2, caractérisé en ce que la somme de la longueur de la jupe cylindrique (10) et de celle du filetage intérieur (8) est supérieure à la longueur du filetage (30) du tube.

4. Manchon fileté selon l'une des revendications précédentes, caractérisé en ce que, à la jupe cylindrique (10) fait suite, dans la direction axiale, une partie d'extrémité annulaire (38) dont le diamètre intérieur (40) correspond au moins approximativement au diamètre du noyau de vis du filetage intérieur (8).

5. Manchon fileté selon l'une des revendications précédentes, caractérisé en ce que la jupe (10) et/ou la partie d'extrémité (38) présente(nt) des ouvertures traversantes radiales qui sont comblées de matière plastique par injection.

6. Manchon fileté selon l'une des revendications précédentes, caractérisé en ce que l'écrou prisonnier (4) est noyé dans la matière plastique, à l'exception du filetage intérieur (8), une collerette (11) entourant la surface frontale avant de la région (6).

7. Manchon fileté selon l'une des revendications précédentes, caractérisé en ce que des nervures, bossages, filetages ou équivalents sont prévus sur la surface externe de l'écrou prisonnier (4).

8. Manchon fileté selon l'une des revendications précédentes, caractérisé en ce que le filetage (30) du tube métallique (26) est cylindrique ou conique.

9. Manchon fileté selon l'une des revendications précédentes, caractérisé en ce qu'il est intégré dans un manchon double comprenant un manchon à souder, le manchon à souder étant construit pour le soudage bout à bout par éléments chauffants, pour le soudage de manchons par éléments chauffants ou pour le soudage à la spire chauffante.

10. Manchon fileté selon la revendication 9, caractérisé en ce qu'à une extrémité, la surface interne du manchon double présente un enroulement de fil de soudage (40) pour le soudage à la spire chauffante tandis que l'écrou prisonnier (4) est prévu à l'autre extrémité.

11. Manchon fileté selon l'une des revendications précédentes, caractérisé en ce que, à la partie d'extrémité cylindrique (38) est prévu un filetage intérieur (40) qui correspond au filetage intérieur (8) prévu dans la région avant (10).

FIG. 1A

FIG.1

FIG. 1B

FIG. 2

FIG. 3

FIG. 4

FIG. 5

FIG.6

FIG. 7

46  38  20  2  10  20  6  11

FIG. 8

48  2  26  46

FIG. 9

2  26  50

FIG. 10  52  56  54  2  26

FIG. 10A

FIG. 10B  56